# EUROPEAN PATENT APPLICATION

(11) **EP 4 040 773 A1**
(43) Date of publication of application: **10.08.2022**
(21) Application number: 22155067.6
(22) Date of filing: 03.02.2022
(51) Int. Cl.: H04N 5/225, G03B 17/18

(54) **WEBCAM INDICATOR**

(30) Priority: 09.02.2021 US 202163147386 P
(71) Applicant: Chen, Samuel, Causeway Bay, Hong Kong (CN)
(72) Inventor: Chen, Samuel, Causeway Bay, Hong Kong (CN)
(74) Representative: Hellmich, Wolfgang

(57) **Abstract**

A webcam indicator system comprises a computer, a camera, an operating system, a camera device driver, a device manager, an indicator device application, an indicator device and a supplemental indicator light. The camera is connected to the computer at a camera interface. The camera device driver enables operation of the camera interface. The device manager operates on the computer and monitors a camera and a microphone. The indicator device application is installed on the computer and queries the device manager for the status of the camera and the microphone. The indicator device is external to and connected to the computer. The supplemental indicator light is mounted to the indicator device and is configured to activate when the indicator device application queries the device manager.

## Description

### FIELD OF THE INVENTION

The present invention is in the field of electronic indicators.

### DISCUSSION OF RELATED ART

A variety of different indicator lights indicate operation of web camera recording. Typically a web camera has an indicator light on it for indicating operation.

### BRIEF DESCRIPTION OF THE DRAWINGS

Figure 1 is a block diagram of the present invention.
Figure 2 is a diagram of the supplemental indicator light having a supplemental light cable.
Figure 3 is a diagram of a wireless supplemental indicator light.

Remainder of Figures show a Bluetooth enabled wireless supplemental indicator light.

### DETAILED DESCRIPTION OF THE PREFERRED EMBODIMENT

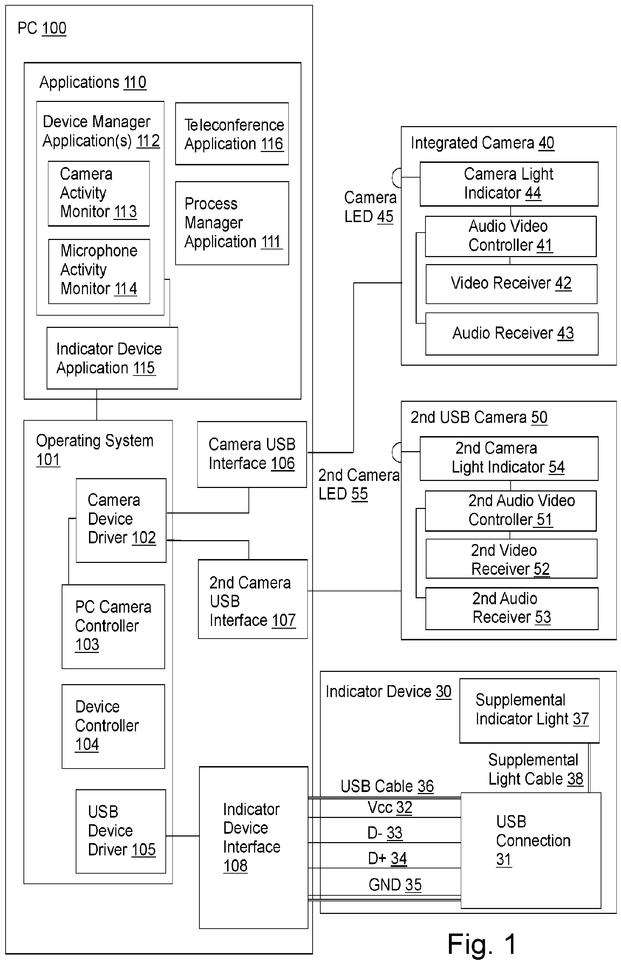

As seen in figure 1, an indicator device 30 provides a supplemental indicator light 37 in a direction opposite are perpendicular to the direction of the regular camera light indicator 44 of an integrated camera 40, or a second camera light indicator 54 of an external second USB camera 50. The indicator device 30 can be mounted in a direction that the regular camera light indicator cannot be seen. The supplemental indicator light 37 preferably has a red light mode for indicating video recording only, an orange light mode for indicating audio and video recording, a yellow light mode for indicating audio recording only, and a green light for indicating lack of video and audio recording. The supplemental indicator light 37 provides an indication for people near the user.

A personal computer 100 typically has an integrated camera 40 such as a laptop or tablet PC. The integrated camera 40 can be formed as a forward facing and reward facing camera for example. The second USB camera 50 can be an external camera the plugs into the USB port of the personal computer 100. The integrated camera 40 typically has a camera light indicator 44 activated by an audio video controller 41. An audio receiver 43 and a video receiver 42 are operatively connected to the audio video controller 41, and the audio video controller 41 is connected to a camera USB interface 106. The camera USB interface 106 is typically internal and can be by a ribbon cable. The camera light indicator 44 activates the camera LED 45 emitting from a side wall of the housing of the integrated camera 40.

Similarly, the second USB camera 50 which could be an external USB camera also has a second camera light indicator 54 and a second audio video controller 51. The second audio video controller 51 has operative connection to the second video receiver 52 and the second audio receiver 53. The second camera USB interface 107 connects to the second audio video controller 51 of the second USB camera 50. The second camera light indicator 54 activates the second camera LED 55 emitting from a side wall of the housing of the second USB camera 50.

The operating system 101 has camera device drivers 102 that connect to the camera USB interface 106, and the second camera USB interface 107. A PC camera controller 103 may interface with the camera device driver 102. A device controller 104 can receive a state of the integrated camera 40, or the second USB camera 50, and output to a USB device driver 105.

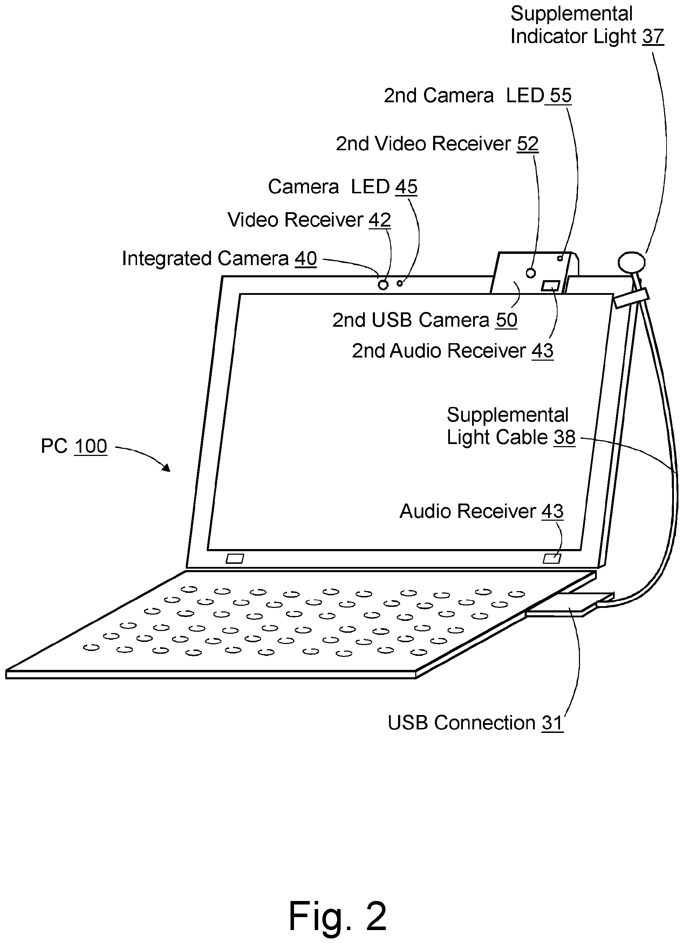

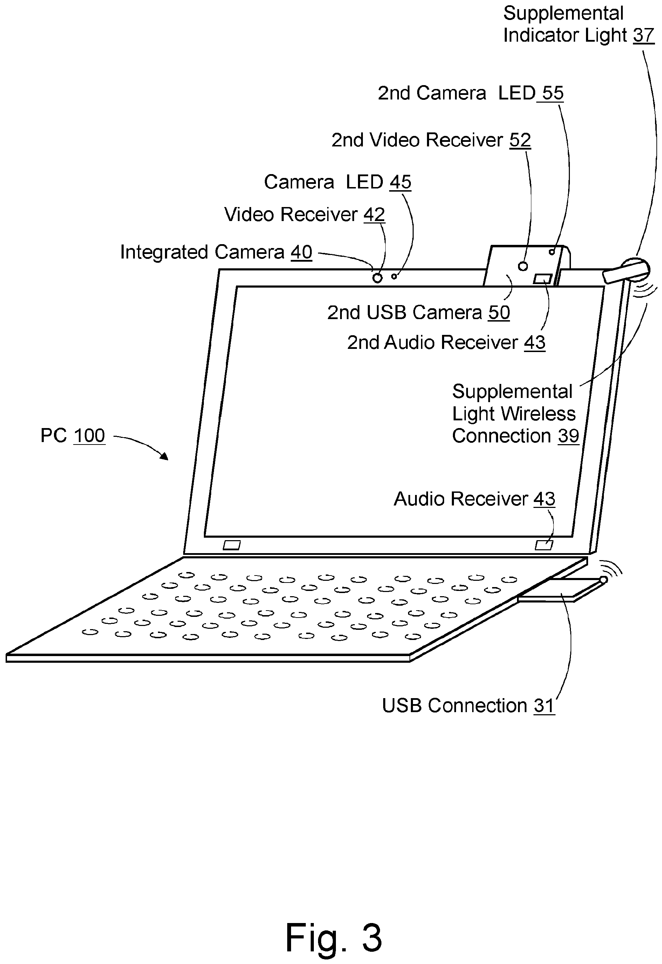

The indicator device interface 108 is connected to a USB cable 36. The USB cable 36 has a VCC 32, negative data line 33, positive data line 34, and ground 35. The USB cable 36 connects to a USB connection 31. The indicator device 30 has a USB connection 31 which can be formed as a USB plug with a supplemental light cable 38, as seen in Fig. 2, or a supplemental light wireless connection 39 as seen in Fig. 3. The wireless connection can be a Bluetooth connection such as a wireless Bluetooth bridge.

The applications 110 include a device manager application 112, a teleconference application 116, a process manager application 111 and an indicator device application 115. The indicator device application 115 queries the device manager application 112 and the device manager application 112 has a camera activity monitor 113 and a microphone activity monitor 114. The teleconference application 116 when activated uses one or both of the cameras attached to the personal computer 100. A process manager application 111 can receive a status from the device controller 104. Similarly, the device manager application 112 can also receive a status showing what device is enabled in the operating system 101.

The indicator device application 115 can use the device manager application 112 to query the active camera activity monitor 113 and query the microphone activity monitor 114. The process manager application 111 can determine when the teleconference application 116 is active, and when the camera activity monitor 113 or the microphone activity monitor 114 shows activity. The indicator device application 115 then interfaces with the operating system 101 and the USB device driver 105 for the indicator device interface 108. The indicator device application 115 those controls the status of the indicator device 30, and specifically controls the status of the supplemental indicator light 37 to indicate the status of either camera device. The indicator device application 115 can obtain a status of the integrated onboard camera, or an external plug-in web USB camera.

For example, in a Windows 10 operating system environment, the indicator device application 115 could open device manager, then check for imaging devices such as web cameras, then open the imaging device properties and copy the name value of physical device object under the details section. The indicator device application 115 could also open the Windows 10 process Explorer procexp.exe after installing it, and then search for the physical device object name value in the search field of the process explorer. The indicator device application 115 could then determine if the process is running and turn on the video indicator light if the video is being recorded. Then the indicator device application 115 activates the supplemental indicator light to provide a supplemental light indication that faces in a direction typically not seen by the main indicator light. The supplemental indicator light also provides a different color and intensity than the built in main indicator light.

A microphone activity monitor 114 can be installed in the operating system as a system process. For example, a microphone status process in Windows 10 shows a microphone activity notification on the display, on the taskbar. The indicator device application 115 can be configured to query the microphone status from the microphone activity monitor 114 of the operating system. The microphone activity monitor 114 thus displays a notification on the graphical display as well as on the supplemental indicator light.

The supplemental indicator light can be formed as a composite LED element with the microphone process being green, the video process being red, and a combination of green and red being an indication that both processes are active. Alternatively, the supplemental indicator light can have a multicolor LED element that can produce a spectrum of different light colors depending upon the status of the video, microphone and other passive input device statuses.

### Reference number list

- 30: Indicator device
- 31: USB connection
- 32: VCC
- 33: negative data line
- 34: positive data line
- 35: ground
- 36: USB cable
- 37: supplemental indicator light
- 38: supplemental light cable
- 39: supplemental light wireless connection
- 40: integrated camera
- 41: A/V controller
- 42: video receiver
- 43: audio receiver
- 44: camera light indicator
- 45: camera LED
- 50: second USB camera
- 51: second A/V controller
- 52: second video receiver
- 53: second audio receiver
- 54: second camera light indicator
- 55: second camera LED
- 100: personal computer
- 101: operating system
- 102: camera device driver
- 103: PC camera controller
- 104: device controller
- 105: USB device driver
- 106: camera USB interface
- 107: camera USB interface
- 108: indicator light interface
- 110: applications
- 111: process manager application
- 112: device manager application
- 113: camera activity monitor
- 114: microphone activity monitor
- 115: indicator device application

## Claims

1. A webcam indicator system comprising:
a. a computer;
b a camera connected to the computer at a camera interface;
c. an operating system (101) configured on the computer;
d. a camera device driver (102) enabling operation of the camera interface;
e. a device manager operating on the computer, wherein the device manager has a camera activity monitor (113) and a microphone activity monitor (114);
f. an indicator device application (115) installed on the computer, wherein the indicator device application (115) queries the device manager for the status of the camera activity and the microphone activity;
g. an indicator device (30), wherein the indicator device (30) is external to the computer, wherein the indicator device (30) is configured to be connected to the computer at an indicator device (30) interface; and
h. a supplemental indicator light (37) mounted to the indicator device (30), wherein the supplemental indicator light (37) is configured to activate when the indicator device application (115) queries the device manager for the status of the camera activity and the microphone activity and the camera activity or microphone activity has an active status.

2. The webcam indicator system of claim 1, wherein the camera has a camera LED (45) configured to activate when the camera is activated.

3. The webcam indicator system of one of the preceding claims , wherein the indicator device (30) connects to the computer through a supplemental light wireless connection (39).

4. The webcam indicator system of one of the preceding claims , wherein the indicator device (30) interface is a Bluetooth connection.

5. The webcam indicator system of one of the preceding claims , wherein the indicator device (30) interface is a USB connection (31) via a supplemental light cable (38).

6. The webcam indicator system of one of the preceding claims , wherein the computer also has a teleconference application installed and a process manager application (111) installed.

7. The webcam indicator system of one of the preceding claims , wherein the operating system (101) includes the camera device driver (102) providing functionality to a PC camera controller (103), wherein the camera device driver (102) enables a first camera USB interface (106, 107), and a second camera USB interface (106, 107).

8. The webcam indicator system of one of the preceding claims , wherein the operating system (101) includes a device controller (104).

9. The webcam indicator system of one of the preceding claims , wherein the indicator device (30) connects to the computer through a supplemental light wireless connection (39).

10. The webcam indicator system of one of the preceding claims , wherein the indicator device (30) interface is a Bluetooth connection.
